# EUROPÄISCHE PATENTSCHRIFT

(11) **EP 3 061 338 B1**
(45) Veröffentlichungstag und Bekanntmachung des Hinweises auf die Patenterteilung: **17.03.2021**
(21) Anmeldenummer: 16156622.9
(22) Anmeldetag: 22.02.2016
(51) Int. Cl.: A01F 29/09, B02C 18/18, B26D 1/00, B23P 15/40, A01F 29/06, B26D 1/38, B26D 7/00

(54) **SCHNEIDLEISTE**
CUTTER BAR
BARRE DE COUPE

(30) Priorität: 24.02.2015 AT 501392015
(43) Veröffentlichungstag der Anmeldung: 31.08.2016
(73) Patentinhaber: Gebrüder Busatis Gesellschaft m.b.H., 3251 Purgstall an der Erlauf (AT)
(72) Erfinder: Lutz, Wolfgang, 3250 Wieselburg (AT); Nadlinger, Markus, 3324 Euratsfeld (AT)
(74) Vertreter: Puchberger & Partner Patentanwälte

(56) Entgegenhaltungen:
- EP-A1- 0 640 449
- EP-A2- 0 290 051
- AT-B- 398 509
- AT-B- 404 658
- AT-U2- 1 642
- DE-A1- 3 108 954
- DE-A1- 3 234 657
- DE-U1-202006 017 540

## Beschreibung

Die Erfindung betrifft eine Schneidleiste mit einem im Wesentlichen rechteckigem Querschnitt, der durch eine obere Fläche, zwei Seitenflächen und eine untere Fläche gebildet wird, wobei die obere Fläche mit mindestens einer Seitenfläche eine Schneidkante bildet, die von einer oder mehreren Hartmetallprofilleisten gebildet wird, die in einer Nut in einem Schneidenkörper befestigt ist bzw. sind.

Eine Schneidleiste für Feldhäcksler ist z.B. aus der AT 398 509 B bekannt. Wie in dieser Druckschrift beschrieben, ist es, um die Standzeit einer solchen Schneidleiste zu erhöhen, bekannt, eine Hartstoffschicht durch thermisches Spritzen oder PTA-Auftragsschweißen auf den Schneidenkörper aufzubringen. Derartige Plasmabeschichtungsverfahren sind sehr aufwendig und daher kostspielig. Ein weiteres Problem stellen die hohen Temperaturen dar, die das Hartstoffmaterial, sowie das Material des Schneidenkörpers ungünstig beeinflussen können. Nur bei genauer Einhaltung ganz bestimmter Verfahrensparameter ist eine hinreichende Härte der Hartstoffschicht, eine gute Bindung zwischen Hartstoffschicht und Schneidenkörper, sowie eine gerade Schneidkante und damit ein regelmäßiger Schneidspalt garantiert. Bereits geringe Abweichungen beim Verfahren führen zu geringeren Standzeiten der Schneidleiste und einem nicht zufriedenstellenden Schneidergebnis.

Eine einfacher herzustellende und kostengünstigere Schneidleiste wurde, wie in der AT 404 658 B beschrieben, entwickelt. Bei dieser Schneidleiste wird die Schneidkante von einer oder mehreren Hartmetallprofilleisten gebildet, die mit dem Schneidenkörper über mechanische Verbindungsmittel, eine Kleberschicht oder eine Lötschicht verbunden ist bzw. sind.

Die EP0640449A1 offenbart eine Schneidleiste mit einem im Wesentlichen rechteckigen Querschnitt, der durch eine obere Fläche, zwei Seitenflächen und eine untere Fläche gebildet wird, wobei die obere Fläche mit mindestens einer Seitenfläche eine Schneidkante bildet, die von einer oder mehreren Profilleisten gebildet wird, die in einer Nut in einem Schneidenkörper befestigt ist bzw. sind, wobei die an die obere Fläche des Schneidenkörpers anschließende Wand der Nut mit der oberen Fläche des Schneidenkörpers einen Winkel kleiner 90° einschließt und die an die seitliche Fläche des Schneidenkörpers anschließende Wand der Nut mit der seitlichen Fläche des Schneidenkörpers einen Winkel kleiner 90° einschließt und die Profilleisten formschlüssig in die Nut eingesetzt wird.

Aufgrund der starken Kräfte, die bei der Zerkleinerung von Schnittgut zwischen der Schneidleiste und den gegen dieselbe arbeitenden Messern auftreten, kommt es bei den beschriebenen Schneidleisten aber immer wieder dazu, dass die Hartmetallprofilleiste ausbricht.

Aufgabe der vorliegenden Erfindung ist es daher, eine verbesserte Schneidleiste zu schaffen, bei der das Ausbrechen der Hartmetallprofilleisten vermieden wird.

Die Aufgabe wird durch eine Schneidleiste mit einem im Wesentlichen rechteckigen Querschnitt, der durch eine obere Fläche, zwei Seitenflächen und eine untere Fläche gebildet wird, wobei die obere Fläche mit mindestens einer Seitenfläche eine Schneidkante bildet, die von einer oder mehreren Hartmetallprofilleisten gebildet wird, die in einer Nut in einem Schneidenkörper befestigt ist bzw. sind, wobei die an die obere Fläche des Schneidenkörpers anschließende Wand der Nut mit der oberen Fläche des Schneidenkörpers einen Winkel kleiner 90°, bevorzugt 89 bis 15°, besonders bevorzugt 80 bis 40° einschließt und wobei die an die seitliche Fläche des Schneidenkörpers anschließende Wand der Nut mit der seitlichen Fläche des Schneidenkörpers einen Winkel kleiner 90°, bevorzugt 89 bis 15°, besonders bevorzugt 80 bis 40° einschließt und die Hartmetallprofilleiste bzw. die Hartmetallprofilleisten formschlüssig in die Nut eingesetzt sind, dadurch gekennzeichnet, dass im Querschnitt die obere Fläche (10) der Hartmetallprofilleiste (2) bzw. der Hartprofilleisten eine Länge von 1 bis 5 mm, bevorzugt 2 bis 4 mm, besonders bevorzugt 3 mm, und die seitliche Fläche (11) der Hartmetallprofilleiste (2) bzw. Hartmetallprofilleisten eine Länge von 5 bis 10 mm, bevorzugt 6 bis 9 mm, besonders bevorzugt 7,5 mm hat.

Durch die erfindungsgemäße Ausrichtung der Nutenwände zu der oberen und den seitlichen Wänden des Schneidenkörpers und den Formschluss werden die beachtlichen Kräfte, die auf die Hartmetallprofilleiste der Schneidleiste beim Schneiden wirken können, stärker als bei bekannten Schneidleisten ins Zentrum des Schneidenkörpers weitergeleitet, die Hartmetallprofilleisten werden dadurch in den Schneidkörper gedrückt und können sich am Schneidenkörper abstützen, sodass die Verbindungsschicht zwischen Schneidenkörper und Hartmetallprofilleiste nicht so stark belastet wird und sich eine haltbarere Verbindung ergibt.

Gemäß einer Ausführungsform ist die im Schneidenkörper vorgesehene Nut spitzwinkelig und die an die obere Fläche des Schneidenkörpers anschließende Wand der Nut schließt mit der an die seitliche Fläche des Schneidenkörpers anschließende Wand der Nut einen Winkel von 20 bis 89°, vorzugsweise 45 bis 70°, insbesondere 60° ein. Diese Nut ist einfach herzustellen, das Einfügen und Befestigen der Hartmetallprofilleisten ist problemlos.

Bei dieser Ausführungsform schließt vorzugsweise die an die obere Fläche des Schneidenkörpers anschließende Wand der Nut mit der oberen Fläche des Schneidenkörpers einen Winkel von 80 bis 60° ein und die an die seitliche Fläche des Schneidenkörpers anschließende Wand der Nut schließt mit der seitlichen Fläche des Schneidenkörpers einen Winkel von 80 bis 60° ein. Durch diese Geometrie ist eine besonders gute Stabilität gegeben.

Bei einer alternativen Ausführungsform weist die im Schneidenkörper vorgesehene Nut eine an die obere Fläche des Schneidenkörpers anschließende Wand, eine an die seitliche Fläche des Schneidenkörpers anschließende Wand und einen sich zwischen diesen Wänden erstreckenden Nutenboden auf, wobei der Winkel zwischen jeder Wand der Nut und dem Nutboden vorzugsweise gleich groß ist und 65 bis 179°, bevorzugt 85 bis 98° beträgt. Diese Variante ergibt einen sehr guten Formschluss mit guter Kraftübertragung.

Bei der erfindungsgemäßen Schneidleiste ist die obere Abmessung der Hartmetallprofilleiste bzw. der Hartmetallprofilleisten 1 bis 5 mm, bevorzugt 2 bis 4 mm, besonders bevorzugt 3 mm und die seitliche Abmessung der Hartmetallprofilleiste bzw. der Hartmetallprofilleisten ist 5 bis 10 mm, bevorzugt 6 bis 9 mm, besonders bevorzugt 7,5 mm. Diese Abmessungen haben sich durch lange Standzeiten bewährt.

Die Hartmetallprofilleiste bzw. die Hartmetallprofilleisten kann bzw. können mit einem Kleber in der Nut befestigt sein.

Bevorzugt ist die Hartmetallprofilleiste bzw. sind die Hartmetallprofilleisten mit einer Lötschicht in der Nut befestigt.

Auf der oberen Fläche des Schneidenkörpers kann eine Verschleißschutzschicht vorzugsweise durch Flammspritzen aufgebracht sein, um einen unmäßigen Verschleiß der Oberfläche der Schneidleiste zu verhindern.

Die Verschleißschutzschicht reicht vorzugsweise bis an die Nut bzw. die Nuten im Schneidenkörper heran. Somit kann es zu keinem Auswaschen des Materials des Schneidenkörpers kommen und es gibt keine Kraftangriffsmöglichkeiten auf die Hartmetallprofilleisten, die zum Ausbrechen derselben führen könnten.

Alternativ kann sich zwischen Verschleißschutzschicht und Hartmetallprofilleiste bzw. Hartmetallprofilleisten eine bzw. jeweils eine beschichtungsfreie Zone von vorzugsweise 1 bis 5 mm, bevorzugter 2 bis 4 mm, besonders bevorzugt 3 mm befinden. Durch den rascheren Verschleiß des Materials des Schneidenkörpers kommt es zu einem Selbstschärfeffekt an den Hartmetallprofilleisten.

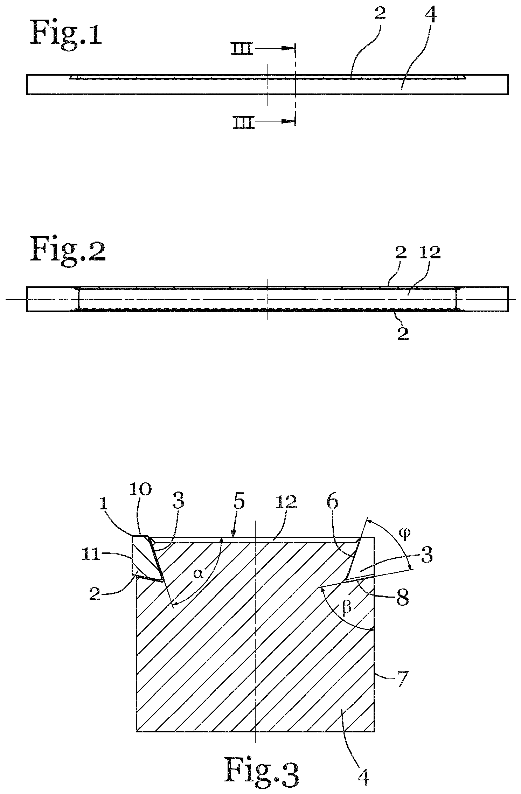

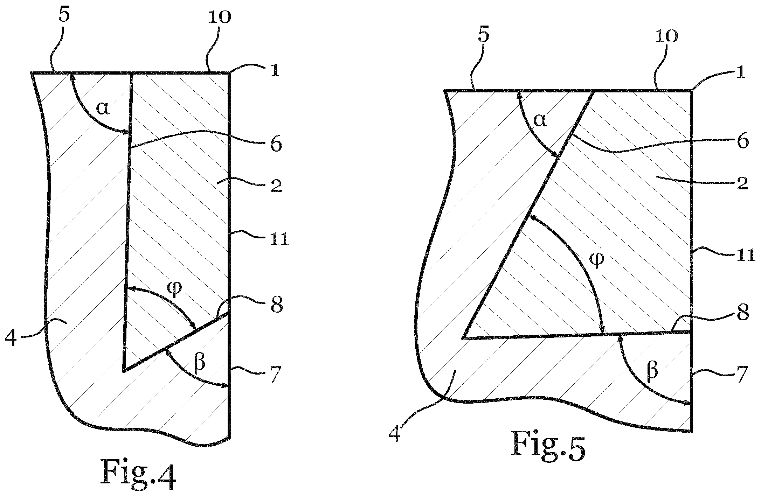

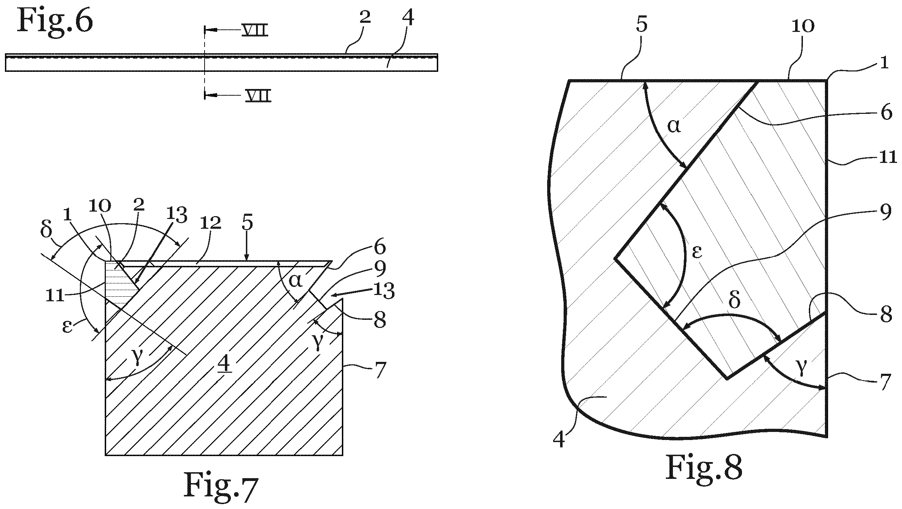

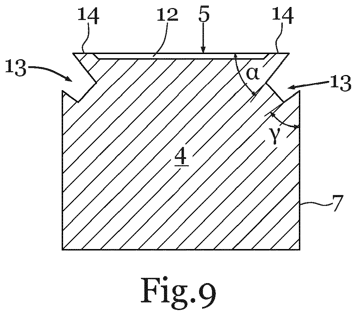

Nunmehr soll die Erfindung anhand der in den beiliegenden Zeichnungen dargestellten Ausführungsvarianten erläutert werden. Dabei zeigt die Fig. 1 eine erfindungsgemäße Schneidleiste in einer Seitenansicht, die Fig. 2 zeigt die erfindungsgemäße Schneidleiste aus Fig. 1 in einer Ansicht von oben, und die Fig. 3 zeigt vergrößert einen Querschnitt durch die Schneidleiste aus Fig. 1 entlang der Schnittlinie III-III. In den Figuren 4 und 5 sind schematisch geometrisch unterschiedliche Ausführungsvarianten einer ersten Ausführungsform der erfindungsgemäßen Schneidleiste dargestellt. Fig. 6 zeigt eine weitere Ausführungsform der erfindungsgemäßen Schneidleiste in einer Seitenansicht. Die Fig. 7 zeigt vergrößert die Schneidleiste aus Fig. 6 entlang des Schnittes VII-VII. Fig. 8 zeigt schematisch eine mögliche Ausführungsvariante der zweiten Ausführungsform. Fig. 9 zeigt eine Variante der Schneidleiste aus Fig. 7.

Die in den Figuren 1 und 2 dargestellte Schneidleiste hat einen Schneidenkörper 4 und weist an ihren beiden oberen Längskanten jeweils eine Hartmetallprofilleiste 2 auf. Ferner ist die Schneidleiste an ihrer Oberfläche mit einer Verschleißschutzschicht 12 versehen, die auf beiden Seiten an die Hartmetallprofilleisten heranreicht.

Wie man in Fig. 3 erkennt, ist die Schneidleiste im Querschnitt im Wesentlichen rechteckig. Der Schneidenkörper 4 weist eine untere Fläche, zwei Seitenflächen 7 und eine obere Fläche 5 auf. Im Bereich der oberen Längskanten der Schneidleiste ist in dem Schneidenkörper 4 beidseitig jeweils eine Nut 3, z.B. durch Fräsen, hergestellt. Jede Nut 3 hat eine an eine Seitenfläche 7 des Schneidenkörpers 4 anschließende Wand 8 und eine an die obere Fläche 5 des Schneidenkörpers 4 anschließende Wand 6. Die Nutenwände 6 und 8 schneiden sich in einem spitzen Winkel ϕ, der im dargestellten Beispiel im Bereich von ca. 60° liegt, was auch ein bevorzugter Bereich für diesen Winkel ist. Es sind jedoch Winkel ϕ von 20° bis 89° vorstellbar. Erfindungsgemäß schließt die an die Seitenfläche 7 des Schneidenkörpers 4 anschließende Nutenwand 8 mit der Seitenfläche 7 einen Winkel β kleiner als 90°, bevorzugt 89° bis 15°, besonders bevorzugt 80° bis 40°, insbesondere 80° bis 60° ein. Im dargestellten Beispiel liegt dieser Winkel β im Bereich von etwa 79°. Die an die obere Fläche 5 des Schneidenkörpers 4 anschließende Nutenwand 6 schließt erfindungsgemäß mit der oberen Fläche 5 des Schneidenkörpers 4 einen Winkel α kleiner 90°, bevorzugt 89° bis 15°, besonders bevorzugt 80° bis 40°, insbesondere 80° bis 60° ein. Im dargestellten Beispiel liegt dieser Winkel α im Bereich von ca. 71°.

In die beiden Nuten 3 sind, wie hier nur auf der linken Seite dargestellt, Hartmetallprofilleisten 2 eingesetzt, deren Abmessungen so gewählt sind, dass die Hartmetallprofilleisten 2 formschlüssig in die Nuten 3 passen. D.h. jede Leiste 2 hat eine Fläche, die sich parallel zur Nutenwand 6 erstreckt, und eine Fläche, die sich parallel zur Nutenwand 8 erstreckt, welche Flächen der Hartmetallprofilleiste einen Winkel ϕ miteinander bilden. Die beiden anderen Flächen jeder Hartmetallprofilleiste erstrecken sich parallel zur oberen Fläche 5 und zur Seitenfläche 7 des Schneidenkörpers 4 und stehen im rechten Winkel aufeinander, wodurch die Schneidkante 1 aus Hartmetall gebildet ist. Die Hartmetallprofilleisten 2 sind in den Nuten 3 mechanisch oder durch eine Klebeverbindung oder eine Lötverbindung befestigt. Durch den schrägen Verlauf der Nutenwände 6 und 8 und der dazu parallelen Flächen der Hartmetallprofilleisten 2 werden Kräfte, die auf die Hartmetallprofilleisten 2 beim Schneiden von Schnittgut aufgebracht werden, in das Zentrum des Schneidenkörpers 4 weitergeleitet. Die Hartmetallprofilleisten 2 werden durch diese Kräfte fester in die Nuten 3 gedrückt und die Leisten 2 können sich gut am Schneidenkörper 4 abstützen, sodass die Verbindung zwischen den Hartmetallprofilleisten 2 und dem Schneidenkörper 4 geringeren Belastungen ausgesetzt ist, als bei herkömmlichen Schneidleisten mit einer rechtwinkligen Nut. An der oberen Fläche 5 des Schneidenkörpers 4 erstreckt sich zwischen den beiden Nuten 3 eine Verschleißschutzschicht 12, die einen vorzeitigen Verschleiß des Grundmaterials des Schneidenkörpers 4 verhindert. Diese Verschleißschutzschicht 12 reicht seitlich bis an die Hartmetallprofilleisten 2 heran. Die Nuten 3 in der dargestellten Ausführungsform, insbesondere mit einem Winkel ϕ im Bereich des dargestellten Winkels, lassen sich mit einem Fräswerkzeug einfach herstellen und das Einfügen der Hartmetallprofilleisten 2 ist mit der dargestellten Geometrie problemlos.

Wie man durch den Vergleich der Geometrien in den Figuren 4 und 5 sieht, kann die Ausführungsvariante der Erfindung mit einer spitzwinkligen Nut sehr unterschiedlich sein. So liegt der Winkel α zwischen der oberen Fläche 5 des Schneidenkörpers 4 und der an die obere Fläche 5 des Schneidenkörpers 4 anschließenden Nutenwand 6 in der Fig. 4 bei ca. 88°, während er in der Fig. 5 bei ca. 62° liegt. Der Winkel β zwischen der Seitenfläche 7 des Schneidenkörpers 4 und der an die Seitenfläche 7 des Schneidenkörpers 4 anschließenden Nutenwand 8 liegt in der Fig. 4 bei ca. 82° und in der Fig. 5 bei ca. 88°. In beiden Fällen ergibt sich damit zwischen der Nutenwand 6 und der Nutenwand 8 ein Winkel von ca. 60°, der sich durch Fräsen im Schneidenkörper 4 gut herstellen lässt, wobei jedoch auch Winkel von 45° bis 70° für das Fräsen der Nut keinerlei Herstellungsprobleme machen und ein Fräswinkel zwischen 20° und 89° im Prinzip möglich ist. Trotz der recht unterschiedlichen Geometrien in den Figuren 4 und 5 bewirkt die erfindungsgemäße Auswahl der Winkel den gleichen Effekt, nämlich dass, wenn die Hartmetallprofilleiste 2 starken Kräften beim Schneiden ausgesetzt ist, die Schräge der Nutenwände 6 und 8 eine Einleitung dieser Kräfte ins Innere des Schneidenkörpers 4 bewirken und die Hartmetallprofilleiste 2 durch die Kräfte in die Nut 3 gedrückt wird, wobei sich die Hartmetallprofilleiste 2 am Schneidenkörper 4 abstützen kann, sodass die Verbindung zwischen der Hartmetallprofilleiste 2 und dem Schneidenkörper 4 weniger stark belastet wird, als dies bei einer rechtwinkligen Nut der Fall wäre. Es kommt daher weniger häufig zu einem Ausbrechen der Hartmetallprofilleiste 2 aus dem Schneidenkörper 4 als beim Stand der Technik, wodurch die erfindungsgemäße Schneidleiste eine höhere Standzeit hat.

Die beiden anderen Flächen der Hartmetallprofilleiste 2 , die nicht an den Nutenflächen 6, 8 anliegen, bilden im Querschnitt der Hartmetallprofilleiste 2 rechtwinklig aufeinander stehende Seiten 10, 11, wobei der rechte Winkel die Schneidkante 1 der Schneidleiste bildet. Die obere Seite 10 der Hartmetallprofilleiste hat eine Länge von 1 bis 5 mm, bevorzugt 2 bis 4 mm, besonders bevorzugt 3 mm und die seitliche Fläche 11 der Hartmetallprofilleiste 2 hat eine Länge von 5 bis 10 mm, bevorzugt 6 bis 9 mm, besonders bevorzugt 7,5 mm.

Die Figuren 6 bis 9 zeigen eine andere Ausführungsform der Erfindung, bei der im Gegensatz zur vorangegangenen Ausführungsform die Nut 13 nicht spitzwinklig ist, sondern sich zwischen der an die obere Fläche 5 des Schneidenkörpers 4 anschließende Nutenwand 6 und der an die Seitenfläche 7 des Schneidenkörpers 4 anschließenden Nutenwand 8 ein Nutenboden 9 erstreckt. Entsprechend bildet der Querschnitt der Nut 13 und der Hartmetallprofilleiste 2 ein Fünfeck. Die Winkel δ, ε zwischen den Nutenwänden 6, 8 und dem Nutenboden 9 sind stumpf und liegen zwischen 65 und 179°, bevorzugt 85 und 98° und sind vorzugsweise gleich groß. Die Seitenflächen 10 und 11 der Hartmetallprofilleiste 2, die nicht an einer der Nutenwände 6, 8 oder dem Nutenboden 9 anliegen, stehen im rechten Winkel aufeinander und bilden die Schneidkante 1. Das Längenmaß der Seitenflächen 10 und 11 im Querschnitt der Hartmetallprofilleiste 2 beträgt auch bei dieser Ausführungsform 1 bis 5 mm, bevorzugt 2 bis 4 mm, besonders bevorzugt 3 mm für die obere Seite 10 und 5 bis 10 mm, bevorzugt 6 bis 9 mm, besonders bevorzugt 7,5 mm für die seitliche Seite 11.

Auch in den Figuren 7 und 9 zeigt der Querschnitt der Schneidleiste an beiden oberen Längskanten Nuten 13 für das Befestigen von Hartmetallprofilleisten 2, wobei in Fig. 7 nur in der linken Nut 13 die eingesetzte Hartmetallprofilleiste 2 und in Fig. 9 in keiner der Nuten eine Hartmetallprofilleiste dargestellt ist. Die Erfindung umfasst aber auch Ausführungsvarianten der Schneidleiste, bei denen nur an einer der Seiten eine Nut für eine Hartmetallprofilleiste vorgesehen ist. Dies gilt sowohl für Nutenformen, die ähnlich wie in Fig. 3 ausgebildet sind, als auch für Nutenformen, die ähnlich wie in Fig. 7 und 9 ausgebildet sind. Die Nuten können z.B. durch Fräsen hergestellt werden.

Erfindungsgemäß schließt in den Figuren 7 und 9 die an die Seitenfläche 7 des Schneidenkörpers 4 anschließende Nutenwand 8 mit der Seitenfläche 7 einen Winkel γ kleiner als 90°, bevorzugt 89° bis 15°, besonders bevorzugt 80° bis 40° ein. In den dargestellten Beispielen liegt dieser Winkel γ im Bereich von etwa 55°. Die an die obere Fläche 5 des Schneidenkörpers 4 anschließende Nutenwand 6 schließt erfindungsgemäß mit der oberen Fläche des Schneidenkörpers 4 einen Winkel α kleiner 90°, bevorzugt 89° bis 15°, besonders bevorzugt 80° bis 40° ein. In den dargestellten Beispielen liegt dieser Winkel α im Bereich von ca. 50°. Der Querschnitt der Hartmetallprofilleiste 2 hat die gleiche Geometrie wie die Nut 13 und passt daher formschlüssig in die Nut 13 und alle Kräfte, die auf die Hartmetallprofilleiste 2 ausgeübt werden, werden in den Schneidenkörper 4 übertragen, auf dem sich die Hartmetallprofilleiste 2 abstützt, sodass die Verbindung zwischen Hartmetallprofilleiste 2 und Schneidenkörper, z.B. eine Lötverbindung entlastet wird.

An der oberen Fläche 5 des Schneidenkörpers 4 erstreckt sich zwischen den beiden Nuten 13 eine Verschleißschutzschicht 12, die einen vorzeitigen Verschleiß des Grundmaterials des Schneidenkörpers 4 verhindert. In der Fig. 7 reicht diese Verschleißschutzschicht 12 seitlich bis an die Hartmetallprofilleisten 2 heran. Dadurch kann das weichere Material des Schneidenkörpers 4 nicht abgetragen werden und es ergeben sich keine Kraftangriffsmöglichkeiten auf die Hartmetallprofilleisten. Das ist insbesondere bei Grasschneidleisten von Vorteil, wo Fremdkörper oft das Ausbrechen von Hartmetallprofilleisten verursachen.

Bei der in Fig. 9 gezeigten Variante befindet sich zwischen der Verschleißschutzschicht und jeder Nut, und damit jeder Hartmetallprofilleiste, eine beschichtungsfreie Zone 14, die 1 bis 5 mm, bevorzugt 2 bis 4 mm, besonders bevorzugt 3 mm breit ist. Damit verhindert die Verschleißschutzschicht 12, dass das Grundmaterial des Schneidenkörpers 4 in der Mitte beiderseits der Längsmittelebene der Schneidleiste vorzeitig verschleißt. In den beschichtungsfreien Zonen hingegen wird ein Verschleiß des Grundmaterials zugelassen, der rascher voranschreitet als der Verschleiß der Hartmetallprofilleisten, wodurch sich ein Selbstschärfeffekt der Arbeitskante ergibt. Solche Schneidleisten eignen sich zum Schneiden von Mais.

## Patentansprüche

1. Schneidleiste mit einem im Wesentlichen rechteckigen Querschnitt, der durch eine obere Fläche, zwei Seitenflächen und eine untere Fläche gebildet wird, wobei die obere Fläche mit mindestens einer Seitenfläche eine Schneidkante (1) bildet, die von einer oder mehreren Hartmetallprofilleisten (2) gebildet wird, die in einer Nut (3, 13) in einem Schneidenkörper (4) befestigt ist bzw. sind, wobei die an die obere Fläche (5) des Schneidenkörpers (4) anschließende Wand (6) der Nut (3, 13) mit der oberen Fläche (5) des Schneidenkörpers (4) einen Winkel (a) kleiner 90°, bevorzugt 89 bis 15°, besonders bevorzugt 80 bis 40° einschließt, und die an die seitliche Fläche (7) des Schneidenkörpers (4) anschließende Wand (8) der Nut (3, 13) mit der seitlichen Fläche (7) des Schneidenkörpers (4) einen Winkel (β, γ) kleiner 90°, bevorzugt 89 bis 15°, besonders bevorzugt 80 bis 40° einschließt und die Hartmetallprofilleiste (2) bzw. die Hartmetallprofilleisten formschlüssig in die Nut (3, 13) eingesetzt sind, **dadurch gekennzeichnet, dass** im Querschnitt die obere Fläche (10) der Hartmetallprofilleiste (2) bzw. der Hartprofilleisten eine Länge von 1 bis 5 mm, bevorzugt 2 bis 4 mm, besonders bevorzugt 3 mm, und die seitliche Fläche (11) der Hartmetallprofilleiste (2) bzw. Hartmetallprofilleisten eine Länge von 5 bis 10 mm, bevorzugt 6 bis 9 mm, besonders bevorzugt 7,5 mm hat.

2. Schneidleiste nach Anspruch 1, **dadurch gekennzeichnet, dass** die im Schneidenkörper (4) vorgesehene Nut (3) spitzwinkelig ist und die an die obere Fläche (5) des Schneidenkörpers (4) anschließende Wand (6) der Nut mit der an die seitliche Fläche (7) des Schneidenkörpers (4) anschließende Wand (8) der Nut (3) einen Winkel (ϕ) von 20 bis 89°, vorzugsweise 45 bis 70°, insbesondere 60° einschließt.

3. Schneidleiste nach Anspruch 2, **dadurch gekennzeichnet, dass** die an die obere Fläche (5) des Schneidenkörpers (4) anschließende Wand (6) der Nut (3) mit der oberen Fläche (5) des Schneidenkörpers (4) einen Winkel (a) von 80 bis 60° einschließt und dass die an die seitliche Fläche (7) des Schneidenkörpers (4) anschließende Wand (8) der Nut (3) mit der seitlichen Fläche (7) des Schneidenkörpers (4) einen Winkel (β, γ) von 80 bis 60° einschließt.

4. Schneidleiste nach Anspruch 1, **dadurch gekennzeichnet, dass** die im Schneidenkörper (4) vorgesehene Nut (13) eine an die obere Fläche (5) des Schneidenkörpers (4) anschließende Wand (6), eine an die seitliche Fläche (7) des Schneidenkörpers (4) anschließende Wand (8) und einen sich zwischen diesen Wänden (6, 8) erstreckenden Nutenboden (9) aufweist, wobei der Winkel (δ, ε) zwischen jeder Wand (6, 8) der Nut (13) und dem Nutboden (9) vorzugsweise gleich groß ist und 65 bis 179°, bevorzugt 85 bis 98° beträgt.

5. Schneidleiste nach einem der vorhergehenden Ansprüche 1 bis 4, **dadurch gekennzeichnet, dass** die Hartmetallprofilleiste (2) bzw. die Hartmetallprofilleisten mit einem Kleber in der Nut (3, 13) befestigt ist bzw. sind.

6. Schneidleiste nach einem der Ansprüche 1 bis 4, **dadurch gekennzeichnet, dass** die Hartmetallprofilleiste (2) bzw. die Hartmetallprofilleisten mit einer Lötschicht in der Nut (3, 13) befestigt ist bzw. sind.

7. Schneidleiste nach einem der vorhergehenden Ansprüche 1 bis 6, **dadurch gekennzeichnet, dass** auf der oberen Fläche (5) des Schneidenkörpers (4) eine Verschleißschutzschicht (12) vorzugsweise durch Flammspritzen aufgebracht ist.

8. Schneidleiste nach Anspruch 7, **dadurch gekennzeichnet, dass** die Verschleißschutzschicht (12) bis an die Nut (3, 13) bzw. die Nuten im Schneidenkörper (4) heranreicht.

9. Schneidleiste nach Anspruch 7, **dadurch gekennzeichnet, dass** sich zwischen der Verschleißschutzschicht (12) und der Hartmetallprofilleiste (2) bzw. den Hartmetallprofilleisten eine bzw. jeweils eine beschichtungsfreie Zone (14) von vorzugsweise 1 bis 5 mm, bevorzugt 2 bis 4 mm, besonders bevorzugt 3 mm, befindet.

## Claims

1. A cutter bar with a substantially rectangular cross-section, which is formed by an upper surface, two lateral surfaces and a lower surface, wherein the upper surface forms a cutting edge (1) with at least one lateral surface, the cutting edge being formed by one or multiple profile strips (2) made of hard metal, which is/are fixed in a groove (3, 13) in a cutter bar body (4), wherein the wall (6) of the groove (3, 13) adjacent to the upper surface (5) of the cutter bar body (4) forms an angle (α) of less than 90°, preferably 89 to 15°, particularly preferably 80 to 40°, with the upper surface (5) of the cutter bar body (4), and wherein the wall (8) of the groove (3, 13) adjacent to the lateral surface (7) of the cutter bar body (4) forms an angle (β, γ) of less than 90°, preferably 89 to 15°, particularly preferably 80 to 40° with the lateral surface (7) of the cutter bar body (4), and wherein the profile strip(s) (2) made of hard metal is/are positively inserted into the groove (3, 13), **characterized in that**, in the cross-section, the upper surface (10) of the profile strip(s) (2) made of hard metal has a length of 1 to 5 mm, preferably 2 to 4 mm, particularly preferably 3 mm, and **in that** the lateral surface (11) of the profile strip(s) (2) made of hard metal has a length of 5 to 10 mm, preferably 6 to 9 mm, particularly preferably 7.5 mm.

2. The cutter bar according to claim 1, **characterized in that** the angle of the groove (3) provided in the cutter bar body (4) is acute and **in that** the wall (6) of the groove adjacent to the upper surface (5) of the cutter bar body (4) forms an angle (ϕ) of 20 to 89°, preferably 45 to 70°, in particular 60°, with the wall (8) of the groove (3) adjacent to the lateral surface (7) of the cutter bar body (4).

3. The cutter bar according to claim 2, **characterized in that** the wall (6) of the groove (3) adjacent to the upper surface (5) of the cutter bar body (4) forms an angle (α) of 80 to 60° with the upper surface (5) of the cutter bar body (4) and **in that** the wall (8) of the groove (3) adjacent to the lateral surface (7) of the cutter bar body (4) forms an angle (β, γ) of 80 to 60° with the lateral surface (7) of the cutter bar body (4).

4. The cutter bar according to claim 1, **characterized in that** the groove (13) provided in the cutter bar body (4) has a wall (6) adjacent to the upper surface (5) of the cutter bar body (4), a wall (8) adjacent to the lateral surface (7) of the cutter bar body (4) and a groove bottom (9), which extends between these walls (6, 8), wherein the angle (δ, ε) between each wall (6, 8) of the groove (13) and the groove bottom (9) is preferably equally big and is 65 to 179°, preferably 85 to 98°.

5. The cutter bar according to one of the preceding claims 1 to 4, **characterized in that** the profile strip(s) (2) made of hard metal is/are fixed in the groove (3, 13) by means of an adhesive.

6. The cutter bar according to one of claims 1 to 4, **characterized in that** the profile strip(s) (2) made of hard metal is/are fixed in the groove (3, 13) by means of a layer of solder.

7. The cutter bar according to one of the preceding claims 1 to 6, **characterized in that** a wear-resistant layer (12) is applied to the upper surface (5) of the cutter bar body (4), preferably by means of flame spraying.

8. The cutter bar according to claim 7, **characterized in that** the wear-resistant layer (12) extends all the way to the groove(s) (3, 13) in the cutter bar body (4).

9. The cutter bar according to claim 7, **characterized in that** one coating-free zone (14) (each) of preferably 1 to 5 mm, preferably 2 to 4 mm, particularly preferably 3 mm, is arranged between the wear-resistant layer (12) and the profile bar(s) (2) made of hard metal.

## Revendications

1. Bande de coupe à section transversale sensiblement rectangulaire formée par une surface supérieure, deux surfaces latérales et une surface inférieure, la surface supérieure formant un arête de coupe (1) avec au moins une surface latérale, l'arête étant formé par un ou plusieurs profilés (2) en métal dur fixés dans une rainure (3, 13) dans un corps de bande de coupe (4), la paroi (6) de la rainure (3, 13) adjacente à la surface supérieure (5) du corps de bande de coupe (4) formant un angle (α) inférieur à 90°, de préférence de 89 à 15°, mieux encore de 80 à 40°, avec la surface supérieure (5) du corps de bande de coupe (4) et la paroi (8) de la rainure (3, 13) adjacente à la surface latérale (7) du corps de bande de coupe (4) formant un angle (β, γ) inférieur à 90°, de préférence de 89 à 15°, de préférence de 80 à 40°, avec la surface latérale (7) du corps de bande de coupe (4), et le(s) profilé(s) (2) en métal dur est/sont inséré(s) par engagement positif dans la rainure (3, 13), **caractérisée en ce que** la surface supérieure (10) du profilé (2) en métal dur ou des profilés en métal dur présente en section transversale une longueur de 1 à 5 mm, de préférence de 2 à 4 mm, de manière particulièrement préférée de 3 mm, et la surface latérale (11) du profilé (2) en métal dur ou des profilés en métal dur présente une longueur de 5 à 10 mm, de préférence de 6 à 9 mm, de manière particulièrement préférée de 7,5 mm.

2. Bande de coupe selon la revendication 1, **caractérisée en ce que** la rainure (3) prévue dans le corps de bande de coupe (4) est à angle aigu et la paroi (6) de la rainure adjacente à la surface supérieure (5) du corps de bande de coupe (4) forme un angle (ϕ) de 20 à 89°, de préférence de 45 à 70°, en particulier de 60°, avec la paroi (8) de la rainure (3) adjacente à la surface latérale (7) du corps de bande de coupe (4).

3. Bande de coupe selon la revendication 2, **caractérisée en ce que** la paroi (6) de la rainure (3) adjacente à la surface supérieure (5) du corps de bande de coupe (4) forme un angle (α) de 80 à 60° avec la surface supérieure (5) du corps de bande de coupe (4) et **en ce que** la paroi (8) de la rainure (3) adjacente à la surface latérale (7) du corps de bande de coupe (4) forme un angle (β, γ) de 80 à 60° avec la surface latérale (7) du corps de bande de coupe (4).

4. Bande de coupe selon la revendication 1, **caractérisée en ce que** la rainure (13) prévue dans le corps de bande de coupe (4) comprend une paroi (6) adjacente à la surface supérieure (5) du corps de bande de coupe (4), une paroi (8) adjacente à la surface latérale (7) du corps de bande de coupe (4) et un fond de rainure (9) s'étendant entre ces parois (6, 8), dans lequel l'angle (δ, ε) entre chaque paroi (6, 8) de la rainure (13) et le fond de la rainure (9) est de préférence égal et est de 65 à 179°, de préférence de 85 à 98°.

5. Bande de coupe selon l'une des revendications précédentes 1 à 4, **caractérisée en ce que** le(s) profilé(s) (2) en métal dur est ou sont fixé(s) dans la rainure (3, 13) avec un adhésif.

6. Bande de coupe selon l'une des revendications 1 à 4, **caractérisée en ce que** le(s) profilé(s) (2) en métal dur est ou sont fixé(s) dans la rainure (3, 13) avec une couche de soudure.

7. Bande de coupe selon l'une des revendications précédentes 1 à 6, **caractérisée en ce qu'**une couche de protection contre l'usure (12) est appliquée sur la surface supérieure (5) du corps de bande de coupe (4), de préférence par projection à la flamme.

8. Bande de coupe selon la revendication 7, **caractérisée en ce que** la couche de protection contre l'usure (12) s'étend jusqu'à la rainure (3, 13) ou aux rainures dans le corps de bande de coupe (4).

9. Bande de coupe selon la revendication 7, **caractérisée en ce qu'**une zone (14) sans revêtement de préférence de 1 à 5 mm, de préférence de 2 à 4 mm, particulièrement de préférence de 3 mm, est située entre la couche de protection contre l'usure (12) et le(s) profilé(s) (2) en métal dur.
